# EUROPÄISCHE PATENTANMELDUNG

(11) **EP 3 866 461 A1**
(43) Veröffentlichungstag der Anmeldung: **18.08.2021**
(21) Anmeldenummer: 21150585.4
(22) Anmeldetag: 07.01.2021
(51) Int. Cl.: H04N 7/18

(54) **KAMERA-MONITOR-SYSTEM, VERFAHREN ZUM BETREIBEN EINES KAMERA-MONITOR-SYSTEMS UND KRAFTFAHRZEUG**

(30) Priorität: 12.02.2020 DE 102020201766
(71) Anmelder: Continental Automotive GmbH, 30165 Hannover (DE)
(72) Erfinder: Smits, Thomas, 65824 Schwalbach a. Ts. (DE)
(74) Vertreter: Continental Corporation

(57) **Zusammenfassung**

Ein Kamera-Monitor-System (1) für ein Kraftfahrzeug (10) umfasst eine an dem Kraftfahrzeug (10) abnehmbar befestigbare Haltevorrichtung (110) und eine mobile Kameraeinheit (100), die an der Haltevorrichtung (110) abnehmbar befestigbar ist. Mittels signaltechnischer Kopplungselemente (102, 112) der Haltevorrichtung (110) und der Kameraeinheit (100) ist eine Datenübertragung von Informationsdaten zwischen der Kameraeinheit (100) und der Haltevorrichtung (110) einrichtbar ist. Die Kameraeinheit (100) ist dazu ausgebildet, Bilddaten einer Umgebung zu erfassen und als Messsignale zur weiteren Verarbeitung drahtlos bereitzustellen sowie Informationsdaten der Haltevorrichtung (110) zu empfangen und zur weiteren Verarbeitung drahtlos bereitzustellen. Das Kamera-Monitor-System (1) weist ferner eine Steuereinheit (11, 104) auf, die dazu eingerichtet ist, Signale der Kameraeinheit (100) zu empfangen, zu verarbeiten und Bildsignale zum Anzeigen für einen Monitor (13) des Kraftfahrzeugs (10) bereitzustellen.

## Beschreibung

Die vorliegende Erfindung betrifft ein Kamera-Monitor-System für ein Kraftfahrzeug, insbesondere für ein Landwirtschaftsfahrzeug. Die Erfindung betrifft ferner ein Kraftfahrzeug mit einem solchen Kamera-Monitor-System sowie ein Verfahren zum Betreiben eines Kamera-Monitor-Systems für ein Kraftfahrzeug.

Fahrzeuge können eine Kamera und einen Monitor aufweisen, die für einen Nutzer des Fahrzeugs Bilder der Umgebung bereitstellen. Beispielsweise sind Spiegelersatzsysteme bekannt, bei denen mittels einer Kamera und eines Monitors die Sichtbereiche von herkömmlichen Außenspiegeln abgebildet werden. Es sind auch Rückfahrkameras bekannt, mittels derer Bereiche abbildbar sind, die mit herkömmlichen Spiegeln nicht einsehbar sind. Ferner werden Kamerasysteme auch bei Landwirtschaftsfahrzeugen oder Nutzfahrzeugen, wie Baggern und Traktoren, eingesetzt.

Es ist eine Aufgabe, die der Erfindung zugrunde liegt, ein Kamera-Monitor-System und Verfahren zum Betreiben eines Kamera-Monitor-Systems für ein Kraftfahrzeug bereitzustellen, die jeweils auf einfache und kostengünstige Weise einen flexiblen Einsatz ermöglichen.

Die Aufgabe wird jeweils durch die Merkmale der unabhängigen Patentansprüche gelöst. Vorteilhafte Weiterbildungen sind in den jeweiligen abhängigen Patentansprüchen angegeben.

Gemäß einem Aspekt der Erfindung weist ein Kamera-Monitor-System für ein Kraftfahrzeug eine Haltevorrichtung auf, die außen an dem Kraftfahrzeug oder einem Frontanbaugerät des Kraftfahrzeugs abnehmbar befestigbar ist und die ein signaltechnisches Kopplungselement umfasst. Das Kamera-Monitor-System weist weiter eine mobile Kameraeinheit auf, die an der Haltevorrichtung abnehmbar befestigbar ist und die ein signaltechnisches Kopplungselement umfasst, sodass mittels der signaltechnischen Kopplungselemente eine Datenübertragung von Informationsdaten zwischen der Kameraeinheit und der Haltevorrichtung einrichtbar ist. Die Kameraeinheit ist dazu ausgebildet, Bilddaten einer Umgebung zu erfassen und als Messsignale sowie weitere Signale zur weiteren Verarbeitung drahtlos bereitzustellen. Die weiteren Signale können insbesondere Informationsdaten der Haltevorrichtung umfassen, die die Kameraeinheit empfangen hat. Das Kamera-Monitor-System weist außerdem eine Steuereinheit auf, die dazu eingerichtet ist, Signale der Kameraeinheit zu empfangen, zu verarbeiten und Bildsignale zum Anzeigen für einen Monitor des Kraftfahrzeugs bereitzustellen.

Mittels des beschriebenen Kamera-Monitor-Systems ist ein flexibles, anbaugeräteübergreifendes System realisierbar, das auf einfache und kostengünstige Weise an einen Kraftfahrzeug angebracht und zu einem nutzbringenden Betrieb beitragen kann. In der weiteren Beschreibung wird das Kamera-Monitor-System überwiegend im Zusammenhang mit einem Landwirtschaftsfahrzeug als eine Ausführung des Kraftfahrzeugs beschrieben, aber seine Eigenschaften und Merkmale können auch auf einen Einsatz bei anderen Fahrzeugen übertragen werden.

Gemäß einer bevorzugten Weiterbildung des Kamera-Monitor-System sind die signaltechnischen Kopplungselemente der Kameraeinheit und der Haltevorrichtung so eingerichtet, dass eine drahtlose Datenübertragung von Informationsdaten zwischen der Kameraeinheit und der Haltevorrichtung einrichtbar ist. Insbesondere kann das signaltechnische Kopplungselement der Haltevorrichtung einen RFID-Transponder und das signaltechnische Kopplungselement der Kameraeinheit ein RFID-Lesegerät umfassen, sodass drahtlos und kontaktlos Daten von der Haltevorrichtung mittels der Kameraeinheit ausgelesen werden können.

Alternativ oder zusätzlich kann das Kamera-Monitor-System so ausgebildet sein, dass eines der signaltechnischen Kopplungselemente der Kameraeinheit und der Haltevorrichtung einen Kopplungsstecker und das andere der signaltechnischen Kopplungselemente der Kameraeinheit und der Haltevorrichtung eine zu dem Kopplungsstecker komplementäre Steckeraufnahme umfasst, sodass zwischen der Kameraeinheit und der Haltevorrichtung eine Steckerverbindung ausbildbar ist, mittels derer eine analoge oder digitale Datenübertragung von Informationsdaten zwischen der Kameraeinheit und der Haltevorrichtung einrichtbar ist.

Gemäß einer Weiterbildung des Kamera-Monitor-System weist die mobile Kameraeinheit eine Linse mit einem Öffnungswinkel von 220° auf. Auf diese Weise kann das Kamera-Monitor-System mit nur einer Kameraeinheit zuverlässig betrieben werden. Alternativ kann die Kameraeinheit auch eine Linse mit einem größeren oder kleineren Öffnungswinkel von z.B. 240°, 200° oder 180° aufweisen. Alternativ oder zusätzlich können auch weitere Kameraeinheiten eingesetzt werden, um weitere Umgebungsbereiche zu erfassen oder zu einem besonders sicheren und zuverlässigen Kamera-Monitor-System beizutragen, falls zum Beispiel eine Kameraeinheit ausfällt, oder um zum Beispiel die erfassten Bildbereiche verschiedener Kameraeinheiten miteinander abzugleichen.

Gemäß einer Weiterbildung des Kamera-Monitor-System weist die mobile Kameraeinheit ein Magnetelement auf, das im Zusammenwirken mit der Haltevorrichtung eine magnetische Haltekraft ausbildet. Das Magnetelement ist zum Beispiel als Neodymmagnet ausgebildet. Die Haltevorrichtung ist zum Beispiel aus Metall gefertigt oder weist Metall, insbesondere ein ferromagnetisches Metallelement, auf, sodass im Zusammenwirken mit dem Magnetelement der Kameraeinheit eine zuverlässige magnetische Haltekraft ausbildbar ist. Alternativ kann das Halteelement auch aus Kunststoff gefertigt sein und einen Metallring oder dergleichen aufweisen, sodass die Kameraeinheit magnetisch befestigbar ist.

Außerdem kann das Kamera-Monitor-System so ausgebildet sein, dass die Haltevorrichtung mittels eines Magnets an dem Landwirtschaftsfahrzeug oder einem Frontanbaugerät des Landwirtschaftsfahrzeugs befestigbar ist. Alternativ oder zusätzlich kann die Haltevorrichtung mittels Befestigungselemente, wie zum Beispiel Schrauben, an dem Landwirtschaftsfahrzeug oder dem Frontanbaugerät angebracht werden. Die Haltevorrichtung ist insbesondere so befestigbar, dass sie zerstörungsfrei an dem Landwirtschaftsfahrzeug befestigt werden kann und wieder entfernt werden kann. Die Haltevorrichtung ist an einer einem Innenraum des Landwirtschaftsfahrzeugs abgewandten Außenseite des Landwirtschaftsfahrzeugs befestigbar. Die Haltevorrichtung ist außen am Landwirtschaftsfahrzeug befestigbar, sodass die Haltevorrichtung im Betrieb in Kontakt zur Umwelt ist. Die Haltevorrichtung ist somit auf einfache Weise mit unterschiedlichen Landwirtschaftsfahrzeugen koppelbar und stellt eine Aufnahme für die Kameraeinheit bereit.

Die Haltevorrichtung ist ferner mit unterschiedlichen Kameras oder Kameraeinheiten koppelbar und bildet zum Beispiel eine schalenförmige Aufnahme, die auf die Kameraeinheit abgestimmt ausgebildet ist. Mittels der Kameraeinheit und der Haltevorrichtung ist ein modulares System gebildet, dass flexibel je nach gewünschtem Einsatz verwendbar ist. Es ist möglich, die Haltevorrichtung nur temporär an dem Landwirtschaftsfahrzeug zu befestigen, wenn ein Einsatz gewünscht ist.

Die Haltevorrichtung ist ausgebildet, die Kamera aufzunehmen und zu halten. Beispielsweise ist die Kameraeinheit zylinderförmig ausgebildet, sodass die Haltevorrichtung eine ringförmige Aufnahme bereitstellt. Alternativ kann die Kameraeinheit auch quaderförmig ausgebildet sein und für ein Einsetzen in eine vierkantförmige Haltevorrichtung bestimmt sein. Somit ist die Kameraeinheit mittels der Haltevorrichtung an dem Landwirtschaftsfahrzeug befestigbar. Beispielsweise ist die Kameraeinheit mittels Magneten an der Haltevorrichtung befestigbar. Die Kameraeinheit ist zerstörungsfrei aus der Haltevorrichtung wieder entnehmbar. Somit ist es beispielsweise möglich, die Kamera für eine Mehrzahl von Landwirtschaftsfahrzeug und/oder Frontanbaugeräten für Landwirtschaftsfahrzeuge zu verwenden, die jeweils eine eigene Haltevorrichtung aufweisen. Zudem ist es möglich, die Haltevorrichtung an verschiedenen Landwirtschaftsfahrzeugen anzubringen. Beispielsweise ist es möglich, die Haltevorrichtung zeitlich nur während des Betriebs des Landwirtschaftsfahrzeugs an diesem anzubringen und ansonsten von dem Landwirtschaftsfahrzeug zu entfernen, beispielsweise wenn das Landwirtschaftsfahrzeug geparkt wird.

Die Kameraeinheit ist beispielsweise ausgebildet, wie in der DE 10 2017 208 592 oder der DE 10 2018 218 735 beschrieben.

Darüber hinaus können die Haltevorrichtung und/oder die Kameraeinheit so ausgebildet sein, dass elektrische Energie zum Betreiben der Kameraeinheit von der Haltevorrichtung zu der Kameraeinheit drahtlos übertragbar ist. Zum Beispiel weist die Haltevorrichtung und/oder die Kameraeinheit einen aufladbaren Akkumulator auf. Zum Beispiel weist die Haltevorrichtung und/oder die Kameraeinheit eine Energiesendevorrichtung und/oder eine Energieempfangsvorrichtung auf, die mit einem Akkumulator elektrisch koppelbar sind. Elektrische Energie ist von der Energiesendevorrichtung drahtlos zu der Energieempfangsvorrichtung, zum Beispiel auf Basis von Induktion mittels Spulen, übertragbar. Somit ist es gemäß Ausführungsbeispielen möglich, die Kameraeinheit während des Betriebs im befestigten Zustand in der Haltevorrichtung mit elektrischer Energie zu versorgen. Hierzu muss insbesondere keine Verkabelung zwischen der Haltevorrichtung und der Kamera vorgesehen werden. Alternativ oder zusätzlich kann aber eine Kabel- oder Steckerverbindung zur energetischen Versorgung der beschriebenen Komponenten vorgesehen sein.

Gemäß einem weiteren Aspekt der Erfindung umfasst ein Landwirtschaftsfahrzeug ein Frontanbaugerät, das an einer Vorderseite des Landwirtschaftsfahrzeugs angeordnet und mit diesem gekoppelt ist, und eine Ausführungsform des zuvor beschriebenen Kamera-Monitor-Systems, das mittels der Haltevorrichtung mit dem Frontanbaugerät gekoppelt ist. Das Kraftfahrzeug ist insbesondere als Landwirtschaftsfahrzeug, zum Beispiel als ein Traktor realisiert, der einen funktionalen Frontanbau aufweist, welcher bei Bedarf mit dem Traktor koppelbar ist. Das Kamera-Monitor-System kann daher auch als Vorbau-Kamera-Monitor-System bezeichnet werden.

Alternativ oder zusätzlich kann das beschriebene Kamera-Monitor-System aber auch bei anderen Nutzfahrzeugen, wie einem Bagger oder einem Kran, eingesetzt werden, sodass zu einem sicheren und komfortablen Betrieb des jeweiligen Fahrzeugs beigetragen werden kann. Dadurch, dass Landwirtschaftsfahrzeug eine Ausgestaltung des zuvor beschriebenen Kamera-Monitor-Systems aufweist, sind die beschriebenen Eigenschaften und Merkmale des Kamera-Monitor-Systems auch für das Landwirtschaftsfahrzeug offenbart und umgekehrt.

Gemäß einem weiteren Aspekt der Erfindung umfasst ein Verfahren zum Betreiben eines Kamera-Monitor-Systems für ein Landwirtschaftsfahrzeug ein Koppeln einer Kameraeinheit mit einer Haltevorrichtung des Kamera-Monitor-Systems mittels jeweiliger signaltechnischer Kopplungselemente der Kameraeinheit und der Haltevorrichtung. Das Koppeln kann ferner ein mechanisches Koppeln der Kameraeinheit mit der Haltevorrichtung umfassen, indem die Kameraeinheit in die Haltevorrichtung eingesetzt oder an dieser angebracht wird. Das Verfahren umfasst weiter ein Koppeln der Kameraeinheit und der Haltevorrichtung mit dem Landwirtschaftsfahrzeug oder einem Frontanbaugerät des Landwirtschaftsfahrzeugs. Das Koppeln umfasst dabei insbesondere ein signaltechnisches Koppeln mit einer dazu befähigten Einheit des Landwirtschaftsfahrzeugs oder des Frontanbaugeräts. Ferner kann das Koppeln auch ein mechanisches Koppeln der Kameraeinheit und der Haltevorrichtung umfassen, indem diese an dem Landwirtschaftsfahrzeug oder an dem Frontanbaugerät angebracht werden.

Das Verfahren umfasst weiter ein drahtloses Übertragen von Daten zwischen der Kameraeinheit, der Haltevorrichtung, dem Landwirtschaftsfahrzeug und/oder dem Frontanbaugerät, die Informationsdaten der miteinander koppelnden Komponenten umfassen, wobei zumindest eines der koppelnden Komponenten aus Kameraeinheit, Haltevorrichtung, Landwirtschaftsfahrzeug oder Frontanbaugerät eine Steuereinheit aufweist. Die Steuereinheit befähigt eines der Komponenten dazu, Daten oder Signale zu empfangen, zu verarbeiten und bereitzustellen. Die jeweilige Komponente kann auch als elektronisch intelligente Komponente bezeichnet werden. Bevorzugt sind die Kameraeinheit und das Landwirtschaftsfahrzeug als elektronisch intelligente Komponenten ausgebildet und weisen jeweils eine signaltechnisch kommunikationsfähige Steuereinheit auf.

Das Verfahren umfasst weiter ein Empfangen und Verarbeiten übertragener Daten der Kameraeinheit, der Haltevorrichtung, des Landwirtschaftsfahrzeugs und/oder des Frontanbaugeräts mittels der Steuereinheit und dadurch Erkennen der miteinander signaltechnisch gekoppelten Komponenten und Einrichten des Kamera-Monitor-Systems in Abhängigkeit von den erkannten Komponenten.

Auf diese Weise kann mittels des beschriebenen Verfahrens ein Kamera-Monitor-System automatisch eingerichtet werden und zu einem komfortablen und nutzbringenden Betrieb des Landwirtschaftsfahrzeugs beitragen. Mittels des beschriebenen Verfahrens können die Komponenten des Kamera-Monitor-Systems automatisiert erkannt werden und es ist keine manuelle Eingabe erforderlich, um das Kamera-Monitor-System zu konfigurieren. Dadurch, dass Verfahren insbesondere das Betreiben einer Ausgestaltung des zuvor beschriebenen Kamera-Monitor-Systems ermöglicht, sind die beschriebenen Eigenschaften und Merkmale des Kamera-Monitor-Systems auch für das Verfahren offenbart und umgekehrt.

Gemäß einer Weiterbildung des Verfahrens umfasst das Verarbeiten der übertragenen Daten und das Einrichten des Kamera-Monitor-Systems ein Bereitstellen und Anzeigen von Bildsignalen mittels eines Monitors des Landwirtschaftsfahrzeugs in Abhängigkeit von den erkannten, miteinander signaltechnisch gekoppelten Komponenten. Das Bereitstellen und Anzeigen von Bildsignalen mittels des Monitors des Landwirtschaftsfahrzeugs wird insbesondere in Abhängigkeit von einem vorgegebenen Zeitschwellenwert durchgeführt, der kleiner oder gleich 200 Millisekunden ist. Auf diese Weise kann eine automatisierte Selbstkonfiguration des Kamera-Monitor-Systems eine geforderte Ende-zu-Ende Verarbeitungslatenz berücksichtigen, sodass zu einem zeitnahen und zuverlässigen Einrichten und Anzeigen beigetragen wird.

Gemäß einer Weiterbildung umfasst das Verfahren ein Empfangen von Messsignalen der Kameraeinheit, die Bilddaten von der Umgebung der Kameraeinheit umfassen, sowie ein Verarbeiten der empfangenen Messsignale und Bereitstellen von Bildsignalen mittels der Steuereinheit. Außerdem umfasst das Verfahren ein Anzeigen der bereitgestellten Bildsignale mittels des Monitors. Auf diese Weise kann einem Fahrer des Landwirtschaftsfahrzeugs die erfasste Umgebung im Bereich der Kameraeinheit sowie auch Informationen über die zusammenwirkenden Komponenten angezeigt werden. Zum Beispiel werden dem Fahrer des Landwirtschaftsfahrzeugs die erkannten Komponenten und Geräte auf dem Monitor angezeigt. Optional können Änderungen oder Bestätigungen seitens des Fahrers erfolgen oder gefordert werden.

Gemäß einer weiteren Weiterbildung des Verfahrens umfasst das Verarbeiten der empfangenen Messsignale der Kameraeinheit ein Auswerten und Eingrenzen eines Bildbereichs, der mittels der Kameraeinheit erfasst wurde, und/oder ein Auswerten und Einstellen einer Orientierung der Kameraeinheit mittels Empfangen eines Messsignals eines Beschleunigungssensors der Kameraeinheit. Auf diese Weise kann zu einem besonders zuverlässigen und effizienten Betrieb des Kamera-Monitor-Systems und des damit ausgestatteten Landwirtschaftsfahrzeugs beigetragen werden.

Es ist eine Erkenntnis im Zusammenhang mit der vorliegenden Erfindung, dass zum Beispiel Traktoren regelmäßig mit wechselnden Anbaugeräten eingesetzt werden, die sowohl hinten als auch vorne an dem Traktor angehängt werden können. Falls ein solches Anbaugerät als Traktor-Frontanbaugeräte realisiert ist und ein solches Gespann ein Vorbaumaß von 3,5 m überschreitet (gemessen von dem Lenkrad des Traktors bis zu dem vordersten Punkt des Frontanbaugerätes), ist nach Straßenverkehrsordnung eine Begleitperson als Einweiser vorzusehen.

Alternativ können nach ergänzendem Verkehrsblatt (Amtsblatt des Bundesministeriums für Verkehr und digitale Infrastruktur der Bundesrepublik Deutschland) Systeme zur Anzeige von indirekten Sichtfeldern zum Einsatz kommen, die die darin enthaltenen Anforderungen erfüllen müssen. Solche Systeme werden als Vorbau-Kamera-Monitor-Systeme (VKMS) bezeichnet und können zum Beispiel von der Deutschen Landwirtschafts-Gesellschaft DLG geprüft und zertifiziert werden. Zum Beispiel ist eine solche Prüfung auf das jeweilige Frontanbaugerät in Kombination mit dem zugehörigen Traktor beschränkt, sodass ein jeweiliges Anbaugerät nur im Zusammenwirken mit einem speziellen Traktor genehmigt ist und eine entsprechende Ausstattung mit einem VKMS nur für diese bestimmte Kombination zugelassen ist. Zur Erfüllung der Anforderungen aus dem Verkehrsblatt (insbesondere zur Auflösung der eingesetzten Kameras) existieren überwiegend konventionelle Systeme, die:
- fest an dem Anbaugerät verbaut sind,
- oder mit relativ schweren, robusten Metallgehäusen mechanisch fixiert / verschraubt werden müssen
- analoge, drahtgebundene Kameras besitzen
- immer nur als "gesamtes System" bestehend aus genau definierten Kameras, Splitter (bzw. Kombinationen zur Darstellung zweier Sichtfelder auf einem Display) und Monitor geprüft / zertifiziert und vertrieben werden.

Da ein zulässiges VKMS Ende-zu-Ende zertifiziert wird, kann ein solches konventionelles System nur als "Ganzes" gekauft und betrieben werden. Darüber hinaus bedingt ein solches konventionelles System die Verwendung eines eigenen Monitors vom Systemlieferanten. Demgemäß wird in einem Traktor, der mit einem solchen konventionellen System ausgerüstet ist, ein zusätzlicher Monitor benötigt.

Es ist eine weitere Erkenntnis im Zusammenhang mit der vorliegenden Erfindung, dass zur Erfüllung der Auflösungsanforderungen in konventionellen Systemen immer zwei Kameras mit einem relativ geringen Öffnungswinkel von 40°- 60° eingesetzt werden. Dabei ist eine Kamera in Fahrtrichtung nach links, die andere nach rechts ausgerichtet. Dadurch ist ein solches konventionelles VKMS lediglich für den Zweck des Einbiegens bzw. Einfahrens in einen Straßenbereich verwendbar.

Außerdem sind bisherige VKMS üblicherweise fest verkabelt und müssen jeweils beim Anhängen des Anbaugerätes durch den Benutzer verkabelt oder gesteckt werden. Die Verkabelungsinstallation selbst ist aufwändig, weil neben den einfachen Leitungen zur Stromversorgung auch analoge Videoleitungen zu verlegen sind. Darüber hinaus sind eine Verkabelung des Anbaugerätes und des Traktors von der Aufnahme einer Fronthydraulik bis zum Inneren einer Kabine des Traktors erforderlich.

Mittels des beschriebenen Kamera-Monitor-Systems und des korrespondierenden Verfahrens zum Betreiben des Kamera-Monitor-Systems gemäß der vorliegenden Erfindung kann auf einfache und kostengünstige Weise zu einer automatisierten und zeitsparenden Konfiguration der zusammenwirkenden Komponenten sowie zu einem effizienten Betrieb des Traktors bzw. eines Landwirtschaftsfahrzeugs beitragen werden.

Das beschriebene Kamera-Monitor-System und das korrespondiere Verfahren ermöglichen jeweils einen anbaugeräte- und herstellerübergreifenden Einsatz. Eine zuverlässige Funktionalität ist Traktor- bzw. fahrzeugübergreifend realisierbar. Eine Bildübertragung von der Kameraeinheit zu dem Monitor des Landwirtschaftsfahrzeugs erfolgt insbesondere drahtlos, sodass Verkabelungsaufwände beim Anbringen der Kameraeinheit reduziert sind.

Außerdem kann das beschriebene Kamera-Monitor-System mit lediglich einer Kamera betrieben werden, sodass die Kosten des Kamera-Monitor-Systems reduziert werden können. Alternativ können aber auch zwei oder mehr Kameras zum Einsatz kommen.

Die Kameraeinheit des Kamera-Monitor-Systems ist vorzugsweise so ausgebildet, dass sie werkzeuglos und aufwandsarm für den Benutzer steckbar und mit der Haltevorrichtung koppelbar ist. Trotz der Flexibilität ist zudem ein Wechsel der mobilen Kameraeinheit von einem Anbaugerät zum nächsten fehlbediensicher. Die Kameraeinheit ist ferner nicht nur einen gegebenenfalls speziellen Einsatzzweck verwendbar, sondern kann insbesondere aufgrund ihrer Mobilität auch relativ normale Arbeitsvorgänge unterstützen.

Außerdem wird mittels des modularen Aufbaus des beschriebenen Kamera-Monitor-Systems kein eigener oder zusätzlicher Monitor benötigt, sondern das Kamera-Monitor-System kann mit definierten, bereits vorhandenen Monitoren, insbesondere automatisch, kombiniert werden. Dies kann zum Beispiel durch eine Datenübertragung der Komponenten untereinander und/oder mit der Steuereinheit im Rahmen des beschriebenen Verfahrens erfolgen und zu einer automatisierten und komfortablen Geräteerkennung beitragen.

Darüber hinaus kann das beschriebene Kamera-Monitor-System dazu befähigt sein, eine geeignete visuelle Darstellung auf dem Monitor bei unterschiedlichen Arbeitsstellungen des Anbaugerätes bzw. des Landwirtschaftsfahrzeugs einrichten. Zum Beispiel kann auf diese Weise trotz Neigung ein stets horizontal ausgerichtetes Kamerabild der Kameraeinheit auf dem Monitor angezeigt werden.

Die Kameraeinheit des beschriebenen Kamera-Monitor-Systems ist insbesondere als mobile und draht- oder kabellose Kamera mit eingebautem Akku und Drahtlosschnittstelle realisiert und auf einen Einsatz in der Haltevorrichtung (die auch mit dem englischen Ausdruck "cradle" bezeichnet werden kann) abgestimmt ausgebildet.

Insbesondere ist die Haltevorrichtung mit einem mit RFID-Tag ausgebildet und kann Informationsdaten zum drahtlosen Auslesen für die dazu befähigte Kameraeinheit bereitstellen.
Auf diese Weise kann zum Beispiel das zugehörige Landwirtschaftsfahrzeug bzw. das angebrachte Frontanbaugerät, an dem die Haltevorrichtung verbaut ist, erkannt werden. Ferner kann ein Sichtfeld der Kameraeinheit automatisch und passend zu dem Landwirtschaftsfahrzeug oder dessen Frontanbaugerät maschinen- und herstellerübergreifend konfiguriert werden. Optional kann die Haltevorrichtung über eine Steuereinheit verfügen und als elektronisch intelligente Komponente ausgebildet sein.

Die Kameraeinheit und die Haltevorrichtung sind insbesondere so aufeinander abgestimmt ausgebildet, dass eine einfache und passgenaue Positionierung und Zentrierung der Kameraeinheit einrichtbar ist. Vorzugsweise sind eine werkzeuglose und zeitsparende Montage sowie ein sicherer und zuverlässiger Halt der Kameraeinheit in oder an der Haltevorrichtung dadurch ausgebildet, dass relativ starke Neodym-Magnete in oder an der Kameraeinheit mit einem ferromagnetischen Metallring in oder an der Haltevorrichtung zusammenwirken. Alternativ oder zusätzlich können ein oder mehrere Rasthaken oder anderweitige Kopplungselemente vorgesehen sein, die eine mechanische Arretierung der Kameraeinheit relativ zu der Haltevorrichtung ermöglichen, damit die Kameraeinheit lagerichtig gedreht positionierbar ist.

Ein Einsatz lediglich einer Kamera bzw. einer Kameraeinheit ist dadurch ermöglicht, dass die Kameraeinheit einen Bildsensor mit einer entsprechend hohen Auflösung aufweist und eine Linse umfasst, die vorzugsweise einer relativ großen Öffnungswinkel von zum Beispiel 220° besitzt. Das Kamera-Monitor-System und das Verfahren sind dann vorzugsweise dazu eingerichtet äußere Bildbereiche, die für den Fahrer und das Betreiben des Landwirtschaftsfahrzeugs oder des Frontanbaugeräts gegebenenfalls nicht relevant sind, elektronisch auszuschneiden.

Dabei kann es vorteilhaft sein, eine greifende oder haltende Arretierung der Kameraeinheit so vorzusehen, dass die Kameraeinheit so positioniert ist, dass der in der Kameraeinheit eingebaute Bildsensor, der zum Beispiel ein Aspektverhältnis von 4:3 oder 16:9 aufweist, in Bezug auf seine längere Seite auf eine Horizontale der Umgebung ausgerichtet ist. Auf diese Weise kann eine Auflösung des Bildsensors bestmöglich für den üblichen Betrieb des Landwirtschaftsfahrzeugs genutzt werden. Alternativ oder zusätzlich kann die Kameraeinheit einen oder mehrere Beschleunigungssensoren aufweisen, sodass eine automatische Ausrichtung des Bildformats erfolgt, auch wenn die Kameraeinheit eine runde oder zylinderförmige Form aufweist und keine sofort erkennbare Vorzugslage aufweist.

Die Kameraeinheit bildet eine signaltechnische Empfangsseite aus, die mittels der Haltevorrichtung mit einem BUS-System des Frontanbaugeräts und/oder des Landwirtschaftsfahrzeugs verbunden sein kann, sodass außerdem eine Hydraulik-Stellung, ein Lenkwinkel und/oder eine Geschwindigkeit des Landwirtschaftsfahrzeugs in dem Kamera-Monitor-System mitberücksichtigt werden können. Im Rahmen des Verfahrens zum Betreiben des Kamera-Monitor-Systems können solche zusätzlichen Informationsdaten miteinbezogen werden und zum Beispiel zu einer automatischen Adaption der Kameraeinheit bzw. der von dieser erfassten Umgebung führen. Alternativ kann das durch die Kameraeinheit bereitgestellt Empfangssystem auch lediglich eine Kennung oder Erkennung der signaltechnisch vernetzten Komponenten ermöglichen, ohne mit dem BUS-System des Frontanbaugeräts und/oder des Landwirtschaftsfahrzeugs verbunden zu sein.

Dadurch, dass mittels des Kamera-Monitor-Systems sämtliche signaltechnisch miteinander gekoppelte Komponenten automatisiert erkannt werden können, können sämtliche Parameter in der bildverarbeitenden Auswertung mit einbezogen und das Kamera-Monitor-System bzw. die Bereitstellung von Bilddaten zur Anzeige auf dem Monitor passend konfiguriert werden. Zum Beispiel kann eine Bildqualität oder Skalierung passend so eingestellt werden, dass eine Auflösung, eine Darstellungsgröße oder andere Bildparameter trotz herstellerübergreifender Komponenten stets zu einer korrekten Darstellung auf dem Monitor führen. Bei einer solchen Informationsverarbeitung können insbesondere die Position des Anbaugeräts und die definierte Position der Haltevorrichtung sowie Informationsdaten des Traktors, wie physikalische / mechanische Eigenschaften und verbaute Komponenten, wie zum Beispiel das Display bzw. der Monitor oder weiterer Komponenten, mit berücksichtigt und in das Verfahren zum Betreiben des Kamera-Monitor-Systems mit einbezogen werden.

Weitere Parameter, wie zum Beispiel eine Gamma-Kurve des Monitors, können ebenfalls berücksichtigt werden. Auf diese Weise können erfasste Umgebungsdaten und zugehörige Bildsignale mit mehr Dynamik dargestellt und die einzelnen Komponenten vorteilhaft genutzt werden.

Insbesondere kann ein Timing- oder Zeit-Verhalten einzelner Verarbeitungsblöcke bekannt sein bzw. berücksichtigt werden, wie zum Beispiel eine Verarbeitungslatenz zur Dekodierung eines Videostreams der eingesetzten Kameraeinheit. Das Kamera-Monitor-System und das Verfahren zum Betreiben des Kamera-Monitor-Systems sind hinsichtlich eines solchen Zeit-Verhaltens insbesondere so ausgebildet, dass auch die rein physikalischen Parameter des Monitors, wie zum Beispiel seine Trägheit in Abhängigkeit der Temperatur, berücksichtigt werden, um eine georderte Ende-zu-Ende Latenz zu ermöglichen, die 200 ms nicht überschreitet. Dabei kann ferner auch eine Temperaturmessung erfolgen, die zum Beispiel auf Basis eines Temperatursensors durchgeführt wird, der mit dem Fahrzeugbus gekoppelt ist. Alternativ oder zusätzlich kann mittels des Monitors eine Temperaturmessung durchgeführt bzw. eine gemessene Temperatur bereitgestellt und berücksichtigt werden. Außerdem kann dadurch, dass alle in dem Kamera-Monitor-System signaltechnisch gekoppelte Komponenten automatisiert erkannt werden und somit bekannt sind, zu einer funktionalen Sicherheit des Betriebs des Landwirtschaftsfahrzeugs mit Frontanbaugerät beigetragen werden.

Im Folgenden sind Ausführungsbeispiele der Erfindung anhand schematischer Zeichnungen erläutert. Es zeigen:
Figur 1 ein schematisches Ausführungsbeispiel eines Landwirtschaftsfahrzeugs mit einem Kamera-Monitor-System,
Figur 2 ein schematisches Ausführungsbeispiel einer Kameraeinheit und einer Haltevorrichtung des Kamera-Monitor-Systems in zwei Ansichten,
Figur 3 ein Blockdiagramm für ein Verfahren zum Betreiben des Kamera-Monitor-Systems, und
Figur 4 ein Ablaufdiagramm für das Verfahren zum Betreiben des Kamera-Monitor-Systems.

Elemente gleicher Konstruktion und Funktion sind figurenübergreifend mit den gleichen Bezugszeichen gekennzeichnet. Aus Gründen der Übersichtlichkeit sind gegebenenfalls nicht alle dargestellten Elemente in sämtlichen Figuren mit zugehörigen Bezugszeichen gekennzeichnet.

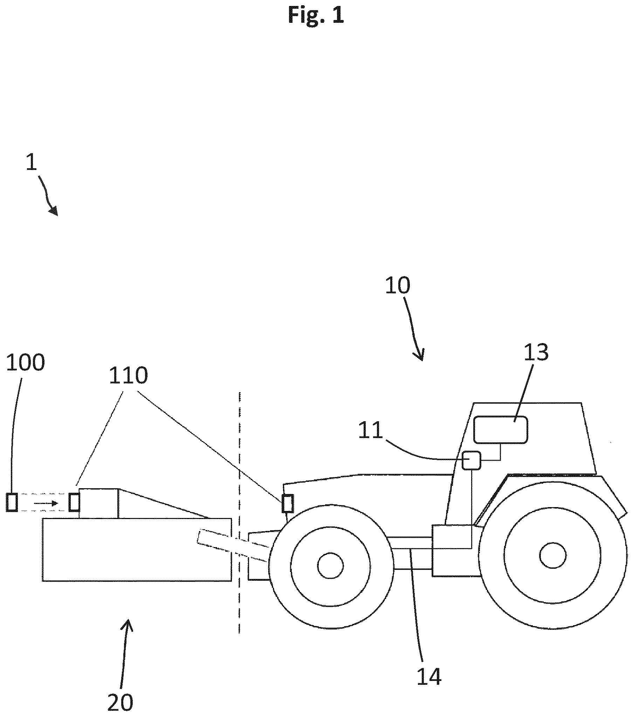

Figur 1 zeigt eine schematische Darstellung eines Landwirtschaftsfahrzeugs in Ausgestaltung eines Traktors 10, der an einer Vorderseite mit einem funktionalen Frontanbaugerät 20 gekoppelt ist. Der Traktor 10 und das Frontanbaugerät 20 sind zudem mit einem Kamera-Monitor-System 1 gekoppelt. Wie nachfolgend anhand der Figuren 1 bis 4 erläutert wird, ist das Kamera-Monitor-System 1 flexibel und anbaugeräteübergreifend einsetzbar und kann auf einfache und kostengünstige Weise zu einem nutzbringenden und vorteilhaften Betrieb des Traktors 1 beitragen.

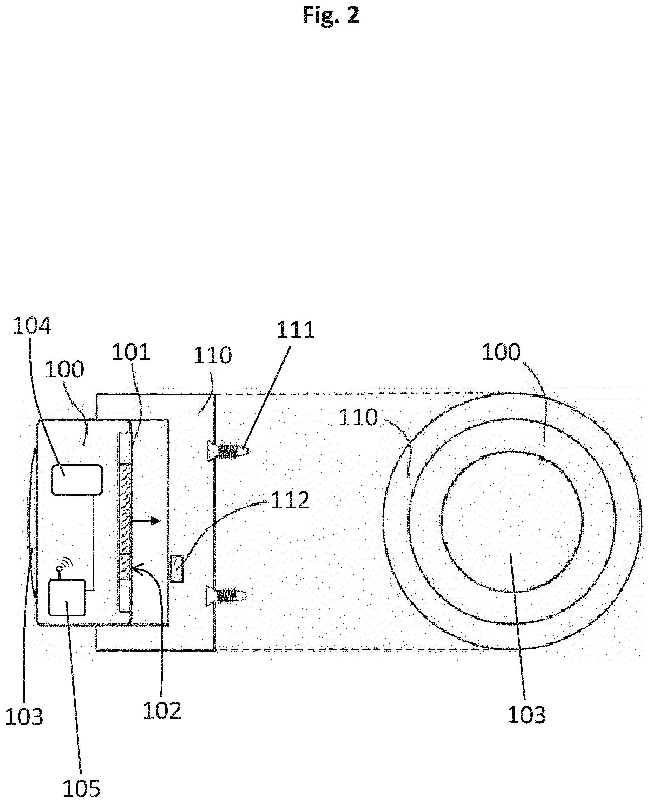

Das Kamera-Monitor-System 1 weist eine Haltevorrichtung 110, die außen an dem Frontanbaugerät 20 des Traktors 10 abnehmbar befestigt ist. Alternativ oder zusätzlich ist eine Haltevorrichtung 110 außen an dem Traktor 10 befestigt, die unter anderem nutzbringend sein kann, wenn der Traktor 10 zum Beispiel ohne Frontanbaugerät 20 betrieben wird. Die Befestigung der Haltevorrichtung 110 kann mittels Verschraubung 111 erfolgen (s. Figur 2). Alternativ oder zusätzlich kann die Haltevorrichtung 110 einen Magneten aufweisen, sodass die Haltevorrichtung aufgrund von magnetischer Haltekraft an dem Traktor 10 und/oder dem Frontanbaugerät 20 befestigbar ist.

Das Kamera-Monitor-System 1 weist ferner eine mobile Kameraeinheit 100 auf, die in oder an der Haltevorrichtung 110 abnehmbar befestigbar ist. Die Kameraeinheit 100 weist eine Linse 103 mit vorzugsweise relativ großem Öffnungswinkel von zum Beispiel 220° auf und ist dazu ausgebildet, Bilddaten einer Umgebung zu erfassen und als Messsignale für eine weitere Bearbeitung, insbesondere zur visuellen Anzeige auf einem Monitor 13 des Traktors 10, drahtlos oder kabellos bereitzustellen. Die Kameraeinheit 100 weist daher eine Kommunikationseinheit 105 auf, die signaltechnisch mit einer Steuereinheit 104 gekoppelt ist und die ein drahtloses Senden von Messsignalen und/oder Bilddaten an empfangsfähige Komponenten ermöglicht.

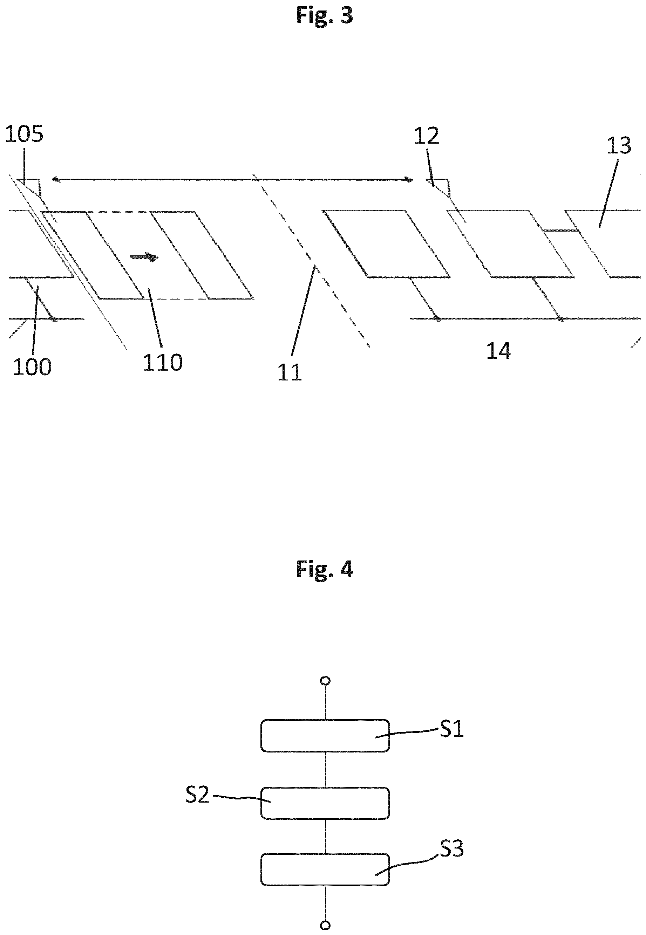

In dem vorliegenden Ausführungsbeispiel weist auch der Traktor 10 eine Steuereinheit 11 und eine Kommunikationseinheit 12 auf (s. Figur 3), sodass Bilddaten und Informationsdaten von Kameraeinheit 100 mittels der Kommunikationseinheit 105 drahtlos an die Kommunikationseinheit 12 des Traktors 10 gesendet und mittels des Monitors 13 dargestellt werden können. Alternativ oder zusätzlich können Signale mittels eines Fahrzeugbusses 14 des Traktors 10 übertragen werden, der sich nach entsprechender Kopplung auch in das Frontanbaugerät 20 und zu der jeweiligen Haltevorrichtung 110 erstrecken kann. Der Fahrzeugbus 14 kann als Signalleitung optional so eingerichtet sein, dass er sich bis zu der Haltevorrichtung 110 an dem Traktor 10 und/oder bis zu der Haltevorrichtung 110 an dem Frontanbaugerät 20 erstreckt.

Figur 2 illustriert schematisch die Kameraeinheit 100 und die Haltevorrichtung 110 in verschiedenen Ansichten. Das linke Teilbild zeigt die die Kameraeinheit 100 und die Haltevorrichtung 110 in einer Seitenansicht, einer Aufsicht oder einer Ansicht von unten. Das rechte Teilbild zeigt die die Kameraeinheit 100 und die Haltevorrichtung 110 in einer Ansicht von vorne in Richtung des Traktors 10.

Die Haltevorrichtung 110 und die mobile Kameraeinheit 100 weisen jeweils ein signaltechnisches Kopplungselement 112 und 102 auf, sodass eine drahtlose Datenübertragung von Informationsdaten zwischen der Kameraeinheit 100 und der Haltevorrichtung 110 einrichtbar ist. Eine solche Datenübertragung kann insbesondere der Abfrage von Informationsdaten der zusammenwirkenden Komponenten dienen, die signaltechnisch miteinander gekoppelt werden. Die Datenübertragung erfolgt bevorzugt mittels RFID-Technik, sodass zum Beispiel das Kopplungselement 112 der Haltevorrichtung 110 ein RFID-Etikett aufweist und das Kopplungselement 102 der Kameraeinheit 100 ein RFID-Lesegerät umfasst, das dazu befähigt ist, die auf dem RFID-Etikett hinterlegten Informationsdaten der Haltevorrichtung 110 elektronisch auszulesen.

Die Kameraeinheit 100 ist somit ferner dazu ausgebildet, Informationsdaten der Haltevorrichtung 110 zu empfangen, zu verarbeiten oder und zur weiteren Verarbeitung bereitzustellen oder mittels der Kommunikationseinheit 105 drahtlos zu versenden. Eine Verarbeitung von Daten oder Signalen kann dabei ganz oder teilweise in der Steuereinheit 104 der Kameraeinheit 100 oder ganz oder teilweise in der Steuereinheit 11 des Traktors 10 erfolgen. Die Steuereinheiten 11 und 104 sind jeweils dazu eingerichtet, Signale der Kameraeinheit 100 zu empfangen, zu verarbeiten und/oder Bildsignale zum Anzeigen für den Monitor 13 des Traktors 10 bereitzustellen. Dabei können die Signale Messsignale und Informationsdaten, wie Kennnummern oder Gerätebezeichnungen umfassen.

Zum Beispiel sind auf dem RFID-Etikett der Haltevorrichtung 110 des Frontanbaugeräts 20 Informationsdaten gespeichert, die Informationen über das Modell, die Funktionalität und die Abmessungen des Frontanbaugeräts 20 umfassen. Mittels der einfach in die Haltevorrichtung 110 einzusteckenden mobilen Kameraeinheit 100 können die dem RFID-Etikett hinterlegten Informationen ausgelesen und an die Steuereinheit 11 des Traktors 10 übermittelt werden und gegebenenfalls zur Kenntnisnahme für einen Fahrer des Traktors 10 auf dem Monitor 13 visualisiert werden.

Die Haltevorrichtung 110 und die mobile Kameraeinheit 100 sind insbesondere in Abstimmung aufeinander ausgebildet. Dies betrifft bevorzugt auch die Form der beiden Komponenten. Gemäß dem in Figur 2 dargestellten Ausführungsbeispiel ist die Kameraeinheit 100 zylinderförmig ausgebildet und die Haltevorrichtung 110 stellt eine korrespondierende ringförmige Schalenaufnahme dar, in die die Kameraeinheit 100 eingesteckt werden kann (angedeutet durch den Pfeil im linken Teilbild der Figur 2).

Damit ein zuverlässiger Halt und/oder eine vorgegebene Ausrichtung der Kameraeinheit 100 in der Haltevorrichtung 110 eingerichtet werden kann, weist die Kameraeinheit 100 einen oder mehrere Haltemagnete 101 auf, die zum Beispiel als Neodym-Magnetelemente ausgestaltete sind und die mit der Haltevorrichtung 110 zusammenwirken. Die Haltevorrichtung 110 ist zum Beispiel aus Metall gefertigt oder weist Metall auf, sodass eine zuverlässige magnetische Haltekraft eingerichtet werden kann, die die Kameraeinheit 100 in der Haltevorrichtung 110 befestigt. Beispielsweise ist die Haltevorrichtung 110 aus einem Kunststoff gefertigt und weist einen Metallring auf, an dem die Kameraeinheit 100 magnetisch arretierbar ist. Eine Befestigung der Haltevorrichtung 110 kann auch über passende Montageadapter für eine jeweilige Maschine bzw. eine anderes Frontanbaugerät 20 erfolgen.

Figur 3 illustriert ein Blockdiagramm, welches ein Zusammenwirken der signaltechnisch gekoppelten Komponenten des Kamera-Monitor-Systems 1 und des Traktors 10 darstellt. Die Steuereinheit 11 des Traktors 10 ist beispielhaft dargestellt. Die Steuereinheit 11 und die Empfangs- oder Kommunikationseinheit 12 könnten auch in dem Monitor 13 integriert sein. Die Busanbindung an dem Fahrzeugbus 14 ist optional. Alternativ oder zusätzlich kann, wie angedeutet, eine direkte Verbindung zwischen der Kommunikationseinheit 12 und dem Monitor 13 des Traktors 10 eingerichtet sein, die zum Beispiel einen Videostream bzw. eine Videoübertragung ermöglicht, falls der Fahrzeugbus 14 für eine solche Art von Datenübertragung zum Beispiel nicht ausgelegt ist oder die Videoübertragung bereits dekodiert ausgegeben wird. Eine solche Videoübertragung kann mittels der Kommunikationseinheit 12 und/oder der Steuereinheit 11 auf verschiedene Weisen ausgegeben werden:
a) Dekodiert: i. analog, ii. digital;
b) nicht dekodiert als Videodatenstrom;
c) transkodiert als veränderter Videodatenstrom

Mittels eines Pfeils ist in Figur 3 eine bidirektionale Kommunikationsfähigkeit der Kommunikationseinheiten 105 und 12 der Kameraeinheit 100 und des Traktors 10 angedeutet. Alternativ ist die Kommunikationseinheit 105 lediglich zum Versenden und die Kommunikationseinheit 12 des Traktors 10 lediglich zum Empfangen von Daten und/oder Signalen ausgebildet. Die Haltevorrichtung 110 ist bevorzugt vorne an dem Frontanbaugerät 20 angebracht. Eine weitere nutzbringende Positionierung ist gemäß Figur 1 vorne an dem Traktor 10. Demgemäß könnte die Kameraeinheit 100 auch am Traktor 10 befestigt werden und trotzdem zu einem zuverlässigen und komfortablen Betrieb des Traktors 10 beitragen.

In einer weiteren Ausführungsform kann die Kameraeinheit drahtlos via Kurzstreckenfunktechnologie einen Aktor der Haltevorrichtung 110 ansteuern, um zum Beispiel eine Pumpe für ein Reinigungssystem mit einer Düse zur Reinigung der Kameralinse 103 der Kameraeinheit 100 zu betätigen. Ebenso kann eine Heizung zum Enteisen der Kameralinse 103 in der Kameraeinheit 100 und/oder der Haltevorrichtung 110 vorgesehen sein. Somit können Kosten und eine Komplexität der Kameraeinheit 100 geringgehalten werden.

Außerdem kann ein mehrachsiger Beschleunigungssensor innerhalb der Kameraeinheit 100 eingesetzt sein. Somit kann das von der Kameraeinheit 100 erfasste Bild stets korrekt auf eine Straße ausgerichtet werden, selbst wenn der Traktor 10 geneigt steht, weil er zum Beispiel aus einem Feldweg ausfährt. Informationen von dem oder durch den Fahrzeugbus 14 können optional zusätzlich mit Werten des Beschleunigungssensors kombiniert werden, sodass zum Beispiel eine Stellung von Fronthydraulikarmen des Frontanbaugeräts 20 berücksichtigt werden können. Neben Informationsdaten, die mittels des Fahrzeugbusses 14 abgefragt und verarbeitet werden können, können zum Beispiel zusätzlich die Messsignale eines weiteren Beschleunigungssensors erfasst und berücksichtigt werden, welcher Auskunft über eine Neigung des Traktors 10 liefert.

Ein Verfahren zum Betreiben des Kamera-Monitor-Systems 1 kann gemäß dem in Figur 4 illustrierten Ablaufdiagramm durchgeführt werden. In einem Schritt S1 erfolgt ein Koppeln der Kameraeinheit 100 mit der Haltevorrichtung 110 des Kamera-Monitor-Systems 1 mittels der signaltechnischen Kopplungselemente 102 und 112. Dies betrifft insbesondere ein signaltechnisches Koppeln und kann auch ein mechanisches Koppeln der Kameraeinheit 100 mit der Haltevorrichtung 110 umfassen, indem die Kameraeinheit 100 in die Aufnahmeschale der Haltevorrichtung 110 eingesetzt oder eingesteckt wird, bis die Haltemagnete 101 mit der Haltevorrichtung 110 eine magnetische Arretierung ausbilden.

In einem Schritt S2 erfolgt ein Koppeln der Kameraeinheit 100 und der Haltevorrichtung 110 mit dem Frontanbaugerät 20 bzw. dem Traktor 10, indem zum Beispiel eine Kommunikationsbereitschaft zwischen den Kommunikationseinheit 105 der Kameraeinheit 100 und der Kommunikationseinheit 12 des Traktors 10 eingerichtet wird. Alternativ oder zusätzlich kann eine Kommunikationsbereitschaft zur Übermittlung von Daten oder Signalen zwischen der Kameraeinheit 100 und dem Traktor 10 mittels des Fahrzeugbusses 14 eingerichtet sein.

In einem weiteren Schritt S3 werden Daten zwischen der Kameraeinheit 100, der Haltevorrichtung 110, dem Traktor 10 und/oder dem Frontanbaugerät 20 übertragen, die Informationsdaten der miteinander koppelnden Komponenten 100, 110, 10, 20 umfassen. Eine solche Datenübertragung erfolgt vorzugsweise drahtlos, indem zum Beispiel Informationsdaten der Haltevorrichtung 110 auf Basis der RFID-Funktionalität der Kopplungselemente 102 und 112 von der Kameraeinheit 100 drahtlos abgefragt und mittels der Kommunikationseinheit 105 auch drahtlos an die Kommunikationseinheit 12 des Traktors 10 übermittelt werden. Alternativ oder zusätzlich können die erfassten Bilddaten der Kameraeinheit 100 drahtlos oder mittels des Fahrzeugbusses 14 an die Steuereinheit 11 bzw. an die Kommunikationseinheit 12 des Traktors 10 übermittelt werden, die mit der Steuereinheit 11 verbunden ist und die Bilddaten zur weiteren Verarbeitung bereitstellt.

Dadurch, dass zumindest eines der koppelnden Komponenten aus Kameraeinheit 100, Haltevorrichtung 110, Traktor 10 oder Frontanbaugerät 20 eine Steuereinheit aufweist, können die übertragenen Daten und/oder Signale mittels der Steuereinheit 104 und/oder 11 empfangen und verarbeitet werden, sodass die miteinander signaltechnisch gekoppelten Komponenten 100, 110, 10, 20, inklusive Subkomponenten, wie der Monitor 13, erkannt werden und das Kamera-Monitor-System 1 in Abhängigkeit von den erkannten Komponenten 100, 110, 10, 20 vorteilhaft eingerichtet werden kann.

Mittels der Kameraeinheit 100 kann auch das Frontanbaugerät 20 hinsichtlich seiner Geometrie plausibilisiert werden. Zum Beispiel ist in dem RFID-Etikett des Kopplungselements 112 der Haltevorrichtung 110 hinterlegt, dass es sich bei dem Frontanbaugerät 20 um eine Schaufel oder eine Kehrmaschinenanbau handelt, sodass mit der Kameraeinheit 100 optisch überprüft werden kann, ob entsprechende Abmessungen oder Formen vorhanden sind. Alternativ oder zusätzlich können zum Beispiel vorhandene Marker oder Kennzeichen an dem Frontanbaugerät 20 mittels der Kameraeinheit 100 optisch überprüft werden und die Informationsdaten der Haltevorrichtung 110 somit plausibilisieren.

Außerdem ermöglicht die Kameraeinheit 100 eine Überprüfung oder Beurteilung einer Stellung des Frontanbaugeräts 20, sodass zum Beispiel eine Fahrtstellung oder eine Arbeitsstellung des Frontanbaugeräts 20 erkannt wird und gegebenenfalls ein Hinweis an den Fahrer des Traktors 10 auf dem Monitor 13 bereitgestellt und ausgegeben wird.

Das beschriebene Kamera-Monitor-System 1 erfordert keine Steckverbinder und kann zum Beispiel so eingerichtet sein, dass es kabellos aufladbar oder betreibbar ist. Insbesondere ermöglicht das Kamera-Monitor-System 1 ein drahtloses oder kabelloses Übertragen von Videodatenströmen. Somit kann das beschriebene Kamera-Monitor-System 1 trotz wechselnder Komponenten, wie andere Frontanbaugeräte, stets eine korrekte Darstellung von Bilddaten Ende-zu-Ende in Bezug auf eine elektronische Signalverarbeitung und -darstellung ermöglichen. Ein zusätzlicher Monitor kann entfallen und die Kameraeinheit 100 kann an anderen Landwirtschaftsfahrzeugen oder Frontanbaugeräten wiederverwendet werden. Das Kamera-Monitor-System 1 ist somit unabhängig von dem Frontanbaugerät 20 und dem Traktor 10 flexibel einsetzbar.

## Patentansprüche

1. Kamera-Monitor-System (1) für ein Kraftfahrzeug (10), aufweisend:
- eine Haltevorrichtung (110), die außen an dem Kraftfahrzeug (10) oder einem Frontanbaugerät (20) des Kraftfahrzeugs (10) abnehmbar befestigbar ist und die ein signaltechnisches Kopplungselement (112) aufweist,
- eine mobile Kameraeinheit (100), die an der Haltevorrichtung (110) abnehmbar befestigbar ist und die ein signaltechnisches Kopplungselement (102) aufweist, sodass mittels der signaltechnischen Kopplungselemente (102, 112) eine Datenübertragung von Informationsdaten zwischen der Kameraeinheit (100) und der Haltevorrichtung (110) einrichtbar ist, wobei die Kameraeinheit (100) dazu ausgebildet ist, Bilddaten einer Umgebung zu erfassen und als Messsignale zur weiteren Verarbeitung drahtlos bereitzustellen sowie Informationsdaten der Haltevorrichtung (110) zu empfangen und zur weiteren Verarbeitung drahtlos bereitzustellen, und
- zumindest eine Steuereinheit (11, 104), die dazu eingerichtet ist, Signale der Kameraeinheit (100) zu empfangen, zu verarbeiten und Bildsignale zum Anzeigen für einen Monitor (13) des Kraftfahrzeugs (10) bereitzustellen.

2. Kamera-Monitor-System (1) nach Anspruch 1, bei dem die signaltechnischen Kopplungselemente (102, 112) der Kameraeinheit (100) und der Haltevorrichtung (110) so eingerichtet sind, dass eine drahtlose Datenübertragung von Informationsdaten zwischen der Kameraeinheit (100) und der Haltevorrichtung (110) einrichtbar ist.

3. Kamera-Monitor-System (1) nach Anspruch 2, bei dem das signaltechnische Kopplungselement (112) der Haltevorrichtung (110) einen RFID-Transponder und das signaltechnische Kopplungselement (102) der Kameraeinheit (100) ein RFID-Lesegerät umfasst.

4. Kamera-Monitor-System (1) nach einem der vorhergehenden Ansprüche, bei dem die mobile Kameraeinheit (100) eine Linse (103) mit einem Öffnungswinkel von 220° aufweist.

5. Kamera-Monitor-System (1) nach einem der vorhergehenden Ansprüche, bei dem die mobile Kameraeinheit (100) ein Magnetelement (101) aufweist, das im Zusammenwirken mit der Haltevorrichtung (110) eine magnetische Haltekraft ausbildet.

6. Kamera-Monitor-System (1) nach einem der vorhergehenden Ansprüche, bei dem die Haltevorrichtung (110) ein ferromagnetisches Metallelement aufweist, das im Zusammenwirken mit dem Magnetelement (101) der Kameraeinheit (100) die magnetische Haltekraft ausbildet.

7. Kamera-Monitor-System (1) nach einem der vorhergehenden Ansprüche, bei dem die Haltevorrichtung (110) und/oder die Kameraeinheit (100) einen Akkumulator umfasst und elektrische Energie zum Betreiben der Kameraeinheit (100) von der Haltevorrichtung (110) zu der Kameraeinheit (100) übertragbar ist.

8. Kraftfahrzeug (10), aufweisend:
- ein Frontanbaugerät (20), das an einer Vorderseite des Kraftfahrzeugs (10) angeordnet und mit diesem gekoppelt ist, und
- ein Kamera-Monitor-System (1) nach einem der vorhergehenden Ansprüche, das mittels der Haltevorrichtung (110) mit dem Frontanbaugerät (20) gekoppelt ist.

9. Verfahren zum Betreiben eines Kamera-Monitor-Systems (1) für ein Kraftfahrzeug (10), umfassend:
- Koppeln einer Kameraeinheit (100) mit einer Haltevorrichtung (110) des Kamera-Monitor-Systems (1) mittels jeweiliger signaltechnischer Kopplungselemente (102, 112) der Kameraeinheit (100) und der Haltevorrichtung (110),
- Koppeln der Kameraeinheit (100) und der Haltevorrichtung (110) mit dem Kraftfahrzeug (10) oder einem Frontanbaugerät (20) des Kraftfahrzeug (10),
- drahtloses Übertragen von Daten zwischen der Kameraeinheit (100), der Haltevorrichtung (110), dem Kraftfahrzeug (10) und/oder dem Frontanbaugerät (20), die Informationsdaten der miteinander koppelnden Komponenten (100, 110, 10, 20) umfassen, wobei zumindest eines der koppelnden Komponenten aus Kameraeinheit (100), Haltevorrichtung (110), Kraftfahrzeug (10) oder Frontanbaugerät (20) eine Steuereinheit (104, 11) aufweist, und
- Empfangen und Verarbeiten der übertragenen Daten der Kameraeinheit (100), der Haltevorrichtung (110), des Kraftfahrzeugs (10) und/oder des Frontanbaugeräts (20) mittels der Steuereinheit (104, 11) und dadurch Erkennen der miteinander signaltechnisch gekoppelten Komponenten (100, 110, 10, 20) und Einrichten des Kamera-Monitor-Systems (1) in Abhängigkeit von den erkannten Komponenten (100, 110, 10, 20).

10. Verfahren nach Anspruch 9, bei dem das Verarbeiten der übertragenen Daten und das Einrichten des Kamera-Monitor-Systems (1) umfasst:
Bereitstellen und Anzeigen von Bildsignalen mittels eines Monitors (13) des Kraftfahrzeugs (10) in Abhängigkeit von den erkannten, miteinander signaltechnisch gekoppelten Komponenten (100, 110, 10, 20).

11. Verfahren nach Anspruch 10, bei dem Bereitstellen und Anzeigen von Bildsignalen mittels des Monitors (13) des Kraftfahrzeugs (10) in Abhängigkeit von einem vorgegebenen Zeitschwellenwert durchgeführt wird, der kleiner oder gleich 200 Millisekunden ist.

12. Verfahren nach Anspruch 10 oder 11, umfassend:
- Empfangen von Messsignalen der Kameraeinheit (100), die Bilddaten von der Umgebung der Kameraeinheit (100) umfassen,
- Verarbeiten der empfangenen Messsignale und Bereitstellen von Bildsignalen mittels der Steuereinheit (104, 11), und
- Anzeigen der bereitgestellten Bildsignale mittels des Monitors (13).

13. Verfahren nach Anspruch 12, bei dem das Verarbeiten der empfangenen Messsignale der Kameraeinheit (100) umfasst:
- Auswerten und Eingrenzen eines Bildbereichs, der mittels der Kameraeinheit (100) erfasst wurde, und/oder
- Auswerten und Einstellen einer Orientierung der Kameraeinheit (100) mittels Empfangen eines Messsignals eines Beschleunigungssensors der Kameraeinheit (100).
